# EUROPÄISCHE PATENTSCHRIFT

(11) **EP 1 393 504 B1**
(45) Veröffentlichungstag und Bekanntmachung des Hinweises auf die Patenterteilung: **21.09.2005**
(21) Anmeldenummer: 02735082.6
(22) Anmeldetag: 27.05.2002
(51) Int. Cl.: H04L 12/437

(54) **DATENRING**
DATA RING
ANNEAU DE DONNEES

(30) Priorität: 05.06.2001 DE 10127286
(43) Veröffentlichungstag der Anmeldung: 03.03.2004
(73) Patentinhaber: Fujitsu Siemens Computers GmbH, 80807 München (DE)
(72) Erfinder: DEPTA, Robert, 86179 Augsburg (DE); WINDERL, Wolfgang, 86420 Diedorf (DE); GRUBER, Reinhold, 86438 Kissing (DE); GRAF, Robert, 86179 Augsburg (DE); SCHUR, Herbert, 86167 Augsburg (DE)
(74) Vertreter: Epping - Hermann - Fischer
(86) Internationale Anmeldenummer: PCT/DE2002/001944
(87) Internationale Veröffentlichungsnummer: WO 2002/100046

(56) Entgegenhaltungen:
- EP-A- 0 806 853
- SIEBEL C.: "Modelisation des moyens de communication locaux de l'entreprise apportant une aide a la planification de configuration" 5. April 1995 (1995-04-05) , INSTITUT NATIONALE POLYTECHNIQUE , TOULOUSE, FRANCE XP002214797 Seite 112, Zeile 20 -Seite 113, Zeile 33 Abbildung 3.3

## Beschreibung

Die Erfindung betrifft einen Datenring mit mehreren abschaltbaren Knoten, an die Geräte anschließbar sind, die zur Kommunikätion miteinander vorgesehen sind, wobei bei den Knoten Mittel zur Fehlerbehandlung vorgesehen sind, und einer Kontrollvorrichtung zur Überwachung und Ansteuerung der Knoten.

Solche Datenringe sind beispielsweise als HUB bekannt und arbeiten in einer besonders leistungsfähigen Variante nach dem Fibre-Channel-Standard. Die an die Knoten des Datenrings angeschlossenen Geräte können flexibel miteinander kommunizieren. Dabei werden Daten in den Datenring von einem Gerät eingebracht und von einem anderen Gerät, wenn es sich als das Bestimmungsgerät erkennt, ausgelesen.

Bei der Inbetriebnahme eines solchen Datenrings laufen unter anderem Initialisierungsprozesse ab, mit denen sich jedes Gerät in dem Datenring anmeldet und zugleich überprüft, welche anderen Geräte vorhanden sind, mit denen kommuniziert werden kann.

Die Knoten weisen bei Datenringen dieser Art Mittel zur Fehlerbehandlung auf, die die von dem Gerät gelieferten Daten überprüfen und erkennen können, wenn fehlerhafte Datensignale vorliegen. Dadurch wird erkannt, wenn ein Gerät fehlerhaft ist. Bei Auftreten eines Gerätefehlers wird durch die Mittel zur Fehlerbehandlung im Knoten ein sogenannter Bypass geschaltet, der das Gerät überbrückt. Es wird dann auch von Abschalten des Knotens gesprochen. Dadurch ist sichergestellt, daß nur fehlerfrei arbeitende Geräte in den Datenring aufgenommen sind und die Datenkommunikation stets fehlerfrei funktioniert.

Aus der EP-A-0 806 853 ist ein Verfahren zur Geschwindigkeitserkennung in einem Token Ring Netzwerk bekannt. Token Ring Netzwerke können mit unterschiedlichen Geschwindigkeiten arbeiten. Daher kann es vorkommen, dass Geräte, die neu an einen bestehenden Ring angeschlossen werden, mit einer anderen Geschwindigkeit arbeiten als der Ring. Dies kann bei Verwendung von aktiven Hubs zu einem Ausschluss des neu angeschlossenen Gerätes aus dem Ring führen. Zur Vermeidung dieses Problems wird ein Verfahren beschrieben, bei dem das neu angeschlossene Gerät den Datenverkehr auf dem Ring beobachtet und seine Geschwindigkeit an die des Ringes anpasst, bevor es ein Signal zum Einfügen in den Ring aussendet.

EP-A-0 806 853 beschreibt u.a. eine Methode zur Erkennung oder Geschwindigkeit, in der ein aktives Hub das Ausgangssignal auf einen festen Wert fixiert um so ein "Burst Error" zu simulieren. Eine angeschlossene 802.5 kompatible Station führt so dann die entsprechende Fehlerkorrektur durch was dazu führt, daß die Geschwindigkeit der angeschlossenen Station ermiltelt werden kann.

Bei Fehlern, die vorübergehender Natur sein könnten oder die den gesamten Datenring betreffen, soll allerdings oft nicht eine sofortige Reaktion erfolgen. Wird ein Gerät in der oben beschriebenen Art und Weise abgeschaltet und durch Schalten eines Bypass' aus dem Datenring entfernt, ist dies für die anderen Knoten ein sehr kurzer Fehler, der in der Regel nicht zu einer Fehlerbehandlung führt. Daher kann es vorkommen, daß die anderen in den Datenring aufgenommenen Geräte keine Kenntnis davon erhalten, daß ein Knoten abgeschaltet wurde, und nachfolgend Daten in den Datenring eingebracht werden, die nicht von einem anderen Gerät verwertbar sind. Ein ordnungsgemäßer Betrieb ist dann nicht mehr möglich.

Andererseits tritt auch der Fall auf, daß ein zusätzliches Gerät an einen bis dahin abgeschalteten Knoten angeschlossen und der Knoten daraufhin zugeschaltet wird. Da das Gerät bei dem Initialisierungsprozeß des Datenringes und damit bei Inbetriebnahme des Datenringes noch nicht angeschlossen war, ist es für die anderen Geräte, die an die anderen Knoten angeschlossen sind, noch unbekannt und kann in vielen Fällen nicht bestimmungsgemäß genutzt werden.

Eine bekannte Möglichkeit zur Lösung des Problems besteht darin, daß die Kontrollvorrichtung die Knoten daraufhin überwacht, ob Geräte aus der Konfiguration entfernt oder angeschlossen werden, beziehungsweise ob Knoten zu- oder abgeschaltet werden. Durch ausreichend schnelle Algorithmen werden die anderen Knoten darüber informiert. Eine solche Lösung ist jedoch wenig flexibel und funktioniert zumindest dann nicht, wenn statt eines Gerätes ein weiterer Datenring angeschlossen wird. In einer solchen verketteten Datenringkonfiguration hat die Kontrollvorrichtung keine Verbindung zu den Knoten des zusätzlich angeschlossenen Datenringes, so daß eine punktuelle, von einer einheitlichen Logik ausgehende Überwachung bzw. Ansteuerung der dort angeschlossenen Geräte nicht möglicht ist.

Aufgabe der Erfindung ist es daher, einen Datenring anzugeben, bei dem bei Entfernen und Hinzufügen von Geräten sichergestellt ist, daß die anderen Knoten beziehungsweise Geräte zuverlässig darüber Kenntnis erhalten, wobei eine solche Lösung flexibel sein soll und auch bei verketteten Datenringen einsetzbar sein muß.

Diese Aufgabe wird durch einen Datenring der eingangs genannten Art gelöst, wie er in Anspruch 1 angegeben ist.

Der Vorteil des erfindungsgemäßen Datenringes liegt darin, daß auch kurze Fehler bei einem der Knoten dazu führen, daß die anderen Knoten einen Fehler erkennen und in der Folge eine Neuinitialisierung oder eine andere Fehlerbehandlungsroutine ausführen können, da durch den zuschaltbaren Zusatzknoten ein Fehlerzustand erzeugbar ist, dessen Dauer ausreicht, um bei den anderen Knoten eine Fehlerbehandlungsroutine auszulösen, die das Abschalten beziehungsweise das Zuschalten von Knoten erkennt.

Durch die gezielte Herstellung eines Fehlerzustandes werden also Fehlerbehandlungsroutinen ausgelöst, die standardmäßig vorgesehen sind und die dem Knoten Kenntnis über den Ausfall eines anderen fehlerhaften Knotens beziehungsweise über das Hinzkommen eines weiteren neuen Knotens verschaffen.

In einer bevorzugten Ausführung handelt es sich um einen Fibre-Channel-Datenring, in dem also ein serieller Datenverkehr erfolgt mit einem Protokoll, nach dem Synchronisationssignale vorgesehen sind. Ein Fehlerzustand bei den anderen Knoten ist dann dadurch herstellbar, daß durch den Zusatzknoten die Übertragung der Synchronisationssignale gestört wird und dadurch bei den anderen Knoten ein Synchronisationsfehler ausgelöst wird. Insbesondere setzt sich dieser erzeugte Fehlerzustand in verketteten Datenringen fort.

Bei einem Verfahren zum Betrieb eines erfindungsgemäßen Datenrings nach Anspruch 7 besteht der Vorteil darin, daß in wenigen und einfachen Verfahrensschritten ein optimaler Betrieb eines Datenrings sichergestellt ist.

Weitere vorteilhafte Ausgestaltungen der Erfindung sind in den Unteransprüchen angegeben.

Die Erfindung wird nachfolgend anhand eines Ausführungsbeispiels näher erläutert. Es zeigt:
- Figur 1: einen Datenring nach dem Stand der Technik,
- Figur 2: einen erfindungsgemäßen Datenring als Fibre-Channel-HUB,
- Figur 3: eine Darstellung eines erfindungsgemäßen Verfahrens als Diagramm und
- Figur 4: einen erfindungsgemäßen Datenring in einer verketteten Konfiguration.

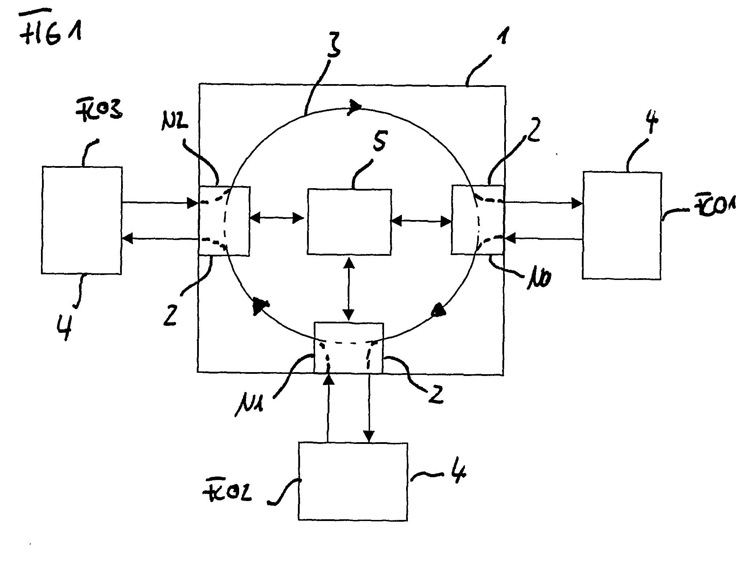

In der Figur 1 ist ein Fibre-Channel-HUB 1 dargestellt. Dieser weist einen Datenring 3 auf, der drei Knoten N0, N1 und N2 besitzt. An die Knoten ist jeweils ein Fibre-Channel-Gerät FC01, FC02 und FC03 angeschlossen. Außerdem ist eine Kontrollvorrichtung 5 vorgesehen, die die Knoten N0, N1 und N2 überwacht und durch die die Knoten N0, N1 und N2 ansteuerbar sind. Wenn die Geräte einwandfrei arbeiten, leiten die Knoten den Datenverkehr im Datenring 3 jeweils über die Geräte, was durch die gestrichelte Linie innerhalb der Knoten N0, N1 und N2 angedeutet ist. Die Knoten N0, N1 und N2 sind dann zugeschaltet.

Wenn an einen Knoten kein Gerät angeschlossen ist, sind die Anschlüsse für ein Gerät durch einen Bypass überbrückt, was ebenfalls durch eine gestrichelte Linie angedeutet ist. Der Knoten ist also abgeschaltet. Gleiches geschieht, wenn die durch einen Knoten von einem Gerät empfangenen Datensignale fehlerhaft sind. Die Mittel zur Fehlerbehandlung des Knotens erkennen dies und schaltet einen Bypass zu dem Gerät, so daß der Knoten abgeschaltet ist. Die Knoten N0, N1 und N2 können dabei so ausgestattet sein, daß die Schaltung eines Bypass gesteuert durch Mittel zur Fehlerbehandlung automatisch erfolgt oder aber zunächst das fehlerhafte Verhalten des Gerätes an die Kontrollvorrichtung 5 gemeldet wird und diese anschließend an den entsprechenden Knoten den Befehl zum Abschalten gibt.

Bei der Inbetriebnahme eines solchen Datenringes wird durch die einzelnen Knoten N0, N1 und N2 jeweils eine Initialisierungsprozedur, die sogenannte Loop Initialisation Procedure (LIP) durchgeführt. Dadurch ist den einzelnen Knoten N0, N1 und N2 bekannt, welche anderen Knoten zu dem Datenring 3 zugeschaltet und welche Geräte daran angeschlossen sind. Wenn im Beispiel von der Figur 1 das Fibre-Channel-Gerät FC01, das an den Knoten N0 angeschlossen ist, Daten an das Fibre-Channel-Gerät FC03 übermitteln will, das an den Knoten N2 angeschlossen ist, so werden die zu übermittelnden Daten entsprechend gekennzeichnet und in den Datenring 3 eingebracht. Das Fibre-Channel-Gerät FC02, das an den Knoten N1 angeschlossen ist, erkennt, daß die Daten nicht für es bestimmt sind und läßt die Daten unverändert passieren. Das Fibre-Channel-Gerät FC03, für das die Daten bestimmt sind, erkennt nun, daß die Daten für es bestimmt sind und liest sie aus dem Datenring 3 aus.

Bei dem Ausfall des Gerätes FC03 besteht nun das Problem, daß der Knoten N2 einen Bypass schaltet und die Daten so weiter im Datenring 3 zirkulieren. Ohne weitere Maßnahmen würden auf diese Weise immer mehr Daten in den Datenring 3 eingebracht werden, ohne daß diese Daten aus dem Datenring 3 auch wieder herausgenommen werden. Daher ist es notwendig, daß die anderen Geräte FC01 und FC02 informiert werden, daß das Gerät FC03 ausgefallen ist. In einer kleiner Anordnung, wie sie in der Figur 1 dargestellt ist, kann dies über die Kontrollvorrichtung 5 erfolgen. Allerdings ist eine solche Lösung, wie eingangs angegeben, nicht flexibel, da bei einer veränderten Konfiguration eine einfache Anpassung nicht möglich ist.

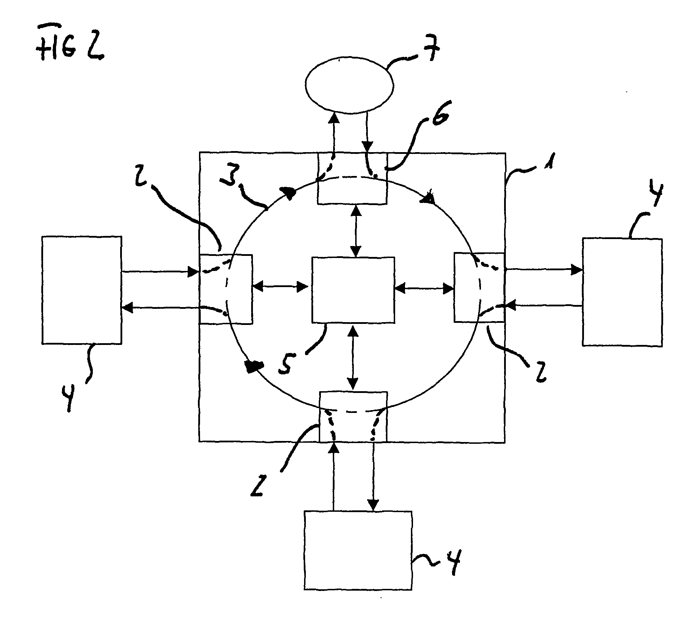

In der Figur 2 ist ein Datenring nach der Erfindung dargestellt. Auch hierbei handelt es sich um einen Fibre-Channel-HUB 1 mit einem Datenring 3. Der Datenring 3 besitzt einen zusätzlichen Knoten, den Zusatzknoten 6. An diesem ist nicht ein Fibre-Channel-Gerät 4 wie an die anderen Knoten 2 angeschlossen, sondern eine spezielle Schaltungsanordnung 7, die ein nicht Fibre-Channel-konformes Signal erzeugt. Während der Bypass der Knoten 2 bei einem angeschlossenen Gerät 4 geöffnet ist, ist der Bypass des Zusatzknotens 6, gesteuert von der Kontrollvorrichtung 5, im Normalfall geschlossen, so daß die Daten in den Datenring 3 nicht über die Schaltungsanordnung 7, die an den Knoten 6 angeschlossen ist, geführt werden. Der Zusatzknoten 6 ist ebenfalls durch die Kontrollvorrichtung 5 ansteuerbar.

Falls nun in einem der anderen Knoten 2 ein fehlerhaftes Signal von dem daran angeschlossenen Gerät 4 festgestellt wird, erfolgt, wie bereits beschrieben, eine Schließung des Bypass' und der Knoten und mit ihm das Gerät 4 sind abgeschaltet. Die Kontrollvorrichtung 5 hat nun Kenntnis über das Abschalten des Knotens. In einer ersten Phase der Fehlerbehandlung wird der Zusatzknoten 6 zugeschaltet. Dadurch läuft der Datenverkehr des Datenrings 3 über die zusätzliche Schaltungsanordnung 7. In einer zweiten Phase der Fehlerbehandlung wird nun bei den anderen Knoten 2 erzwungen, daß diese Knoten sich nicht abschalten, sondern in dem Datenring 3 gehalten werden. Gleichzeitig erzeugt die Schaltungsanordnung 7 ein fehlerhaftes, das heißt nicht Fibre-Channel-konformes Signal, das in den Datenring 3 eingespeist wird. Im Fall der Verwendung des Fibre-Channel-Protokolls, wie er hier beschrieben wird, werden die Synchronisationssignale gestört. In den intakten Knoten 2 führt dies dazu, daß ein sogenannter "loss-of-sync"-Fehler festgestellt wird. Gemäß den Gerätespezifikationen von Knotenbausteinen wird, wenn ein loss-of-sync-Fehler für eine bestimmte Mindestdauer anliegt, eine Neuinitialisierung, die sogenannte "Loop Initialisation Procedure" (LIP), ausgelöst. Da der Fehler bei allen Knoten auftritt wird, wie bei der Inbetriebnahme des Datenrings, durch alle intakten Knoten 2 festgestellt, welche anderen Geräte momentan in den Datenring 3 aufgenommen sind. Dabei wird erkannt, welches der Geräte 4 beziehungsweise welcher zugehörige Knoten 2 defekt und das Gerät somit nicht mehr adressierbar ist.

Wenn diese Fehlerbehandlungsphase abgeschlossen wird, wird in einer dritten Fehlerbehandlungsphase der fehlerhafte Knoten endgültig aus dem Datenring 3 entfernt und es ist im folgenden wieder ein fehlerfreier Betrieb des Datenrings möglich.

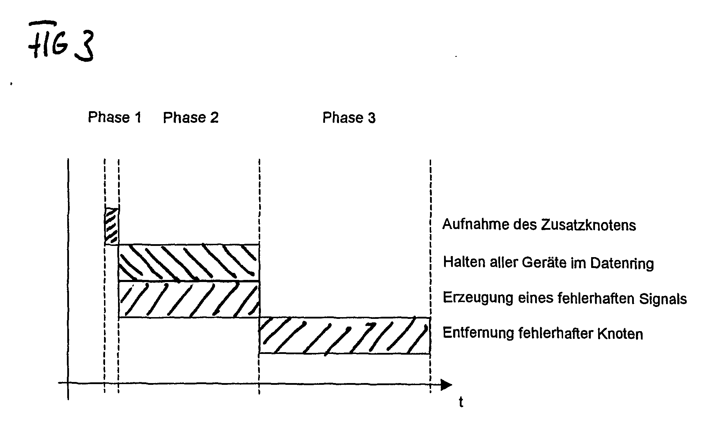

Der Ablauf des Vorgehens bei Auftreten eines Fehlers ist in der Figur 3 nochmals anhand eines Diagramms übersichtlich dargestellt. In einer bevorzugten praktischen Ausführung eines erfindungsgemäßen Datenrings beziehungsweise eines erfindungsgemäßen Verfahrens erfolgt die Aufnahme des Zusatzknotens innerhalb von 1 ms. Die zweite Phase, in der alle Geräte im Datenring erhalten werden und gleichzeitig durch den Zusatzknoten ein fehlerhaftes Signal in der Fibre-Channel-Konvention erzeugt wird, dauert 108 ms. Für die dritte Phase, in der der fehlerhafte Knoten aus dem Datenring entfernt, also abgeschaltet wird, ist eine Dauer von 177 ms vorgesehen. Dadurch wird man den Knotenbausteinen gerecht, die typischerweise nach 100 ms eines loss-of-sync-Fehlers eine Loop Initialisation Procedure durchführen. Die dritte Phase verhindert bei einer Verkettung der gleich arbeitenden HUBs einen totalen Stillstand des gemeinsamen Datenringes.

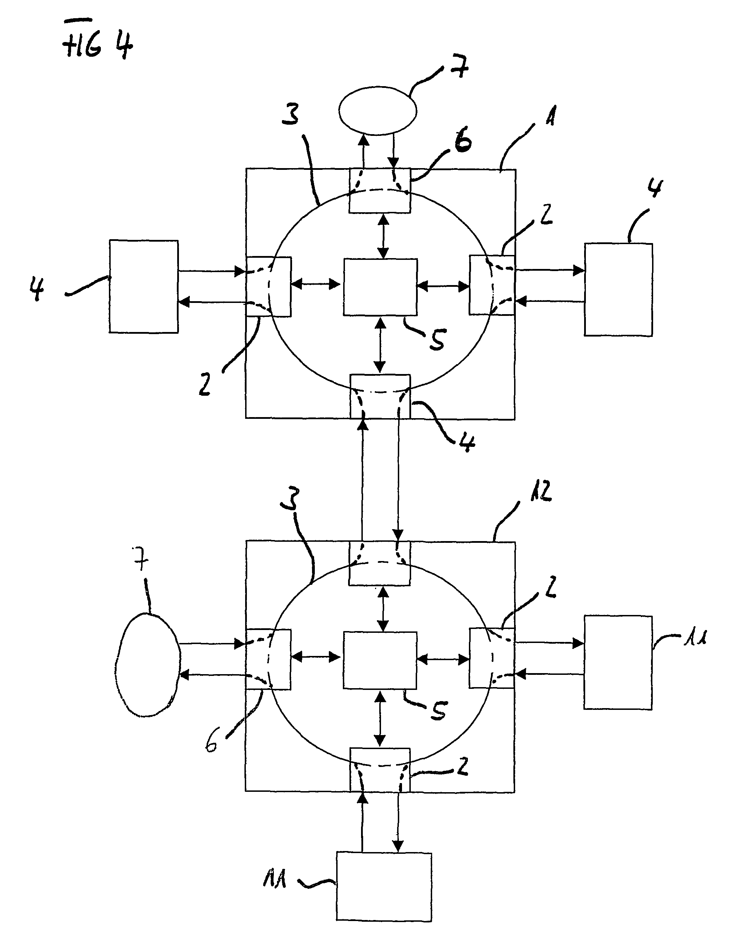

Anhand der Figur 4 wird deutlich, wie ein erfindungsgemäßer Datenring in einer verketteten Konfiguration eingesetzt werden kann. Insbesondere wird deutlich, welche Vorteile bezüglich der Flexibilität die erfindungsgemäße Lösung bietet gegenüber einer Steuerung über die Kontrollvorrichtung.

Im oberen Teil der Figur 4 ist ein HUB 1 mit einem erfindungsgemäßen Datenring 3 gezeigt, wie er bereits anhand der Figur 2 beschrieben wurde. Eines der Geräte 4 wurde weggelassen und stattdessen ein zweiter HUB 12 angeschlossen, der konventionell gemäß der Figur 1 aufgebaut ist. Auch an dem zweiten HUB 12 sind Fibre-Channel-Geräte 11 angeschlossen. Falls nun bei einem der Geräte 4, die an dem ersten HUB 1 angeschlossen sind, ein Fehler auftritt, so könnte, wie eingangs beschrieben, auch eine Fehlerbehandlungsroutine unter Verwendung der Kontrollvorrichtung 5 eingesetzt werden. In einer verketteten Konfiguration, wie sie in der Figur 4 dargestellt ist, hat die Kontrollvorrichtung 5 des ersten HUBs 1 jedoch keine Möglichkeit, den Betriebszustand der Knoten 2 beziehungsweise der daran angeschlossenen Geräte 11 des zweiten HUBs 12 zu kontrollieren und zu beeinflussen. Bei Datenringen nach dem Stand der Technik bestünde also für den HUB 1 keine Möglichkeit, eine Loop Initialisation Procedure der Knoten 2 im zweiten HUB 12 anzustoßen.

Bei einer erfindungsgemäßen Ausgestaltung des Datenrings 3 des HUBs 1, wie sie anhand von Figur 3 beschrieben wurde, setzt sich das durch den Zusatzknoten 6 erzeugte fehlerhafte, das heißt nicht Fibre-Channel-konforme Signal fort und erreicht damit auch den zweiten HUB 12 und die daran angeschlossenen Knoten 2 und Geräte 11. Auch hier tritt jetzt ein loss-of-sync-Fehler auf, der nach einer gewissen Zeitdauer zu einer Loop Initialisation Procedure führt. Sobald ein Fehler erkannt wurde wird auch hier ein Zusatzknoten 6 mit der daran angeschlossenen speziellen Schaltungsanordnung 7 aktiviert und die Knoten 2 in dem Datenring gehalten, da sonst bei Auftreten eines Fehlers eine automatische Abschaltung der Knoten erfolgen würde. Da bei Fibre-Channel-Knoten eine Loop Initialisation Procedure immer vorgesehen ist, kann ein erfindungsgemäßer Datenring mit beliebigen anderen Fibre-Channel-Datenringen gekoppelt werden, die nach der Erfindung ausgestaltet sind, so daß sich die erfindungsgemäßen Vorteile auch auf diese Datenringe erstrecken. Eine zusätzliche, den Datenringen übergeordnete Kontrollvorrichtung, die Informationen über das Zu- und Abschalten an angeschlossene Datenringe weitergibt, ist nicht erforderlich.

### Bezugszeichenliste

- 1: HUB
- 2: Knoten
- 3: Datenring
- 4: Fibre-Channel-Gerät
- 5: Kontrollvorrichtung
- 6: Zusatzknoten
- 7: Schaltungsanordnung
- 11: Fibre-Channel-Gerät
- 12: zweiter HUB
- FC01: erstes Fibre-Channel-Gerät
- FC02: zweites Fibre-Channel-Gerät
- FC03: drittes Fibre-Channel-Gerät
- N0: erster Knoten
- N1: zweiter Knoten
- N3: dritter Knoten

## Patentansprüche

1. Datenring (3) mit
- mehreren abschaltbaren Knoten (2) zum Anschluss von Geräten (4), die zur Kommunikation miteinander vorgesehen sind, wobei bei den Knoten (2) Mittel zur Fehlerbehandlung vorgesehen sind und nach Erkennung eines Fehlerzustandes eine Neuinitialisierung oder Fehlerbehandlungsroutine ausgelöst wird, und
- einer Kontrollvorrichtung (5) zur Überwachung und Ansteuerung der Knoten (2),
**dadurch gekennzeichnet, dass**
- in dem Datenring (1) ein durch die Kontrollvorrichtung (5) zuschaltbarer Zusatzknoten (6) vorgesehen ist, der Mittel aufweist zur gezielten Herstellung eines Fehlerzustandes bei anderen Knoten (2), und
- während der Herstellung des Fehlerzustandes durch die Mittel des Zusatzknotens bei den anderen Knoten (2) die anderen Knoten (2) durch die Kontrollvorrichtung (5) in dem Datenring (3) gehalten werden.

2. Datenring nach Anspruch 1,
**dadurch gekennzeichnet, dass**
über den Datenring (3) ein serieller Datenverkehr erfolgt mit einem Protokoll, nach dem Synchronisationssignale vorgesehen sind.

3. Datenring nach Anspruch 2,
**dadurch gekennzeichnet, dass**
der Aufbau des Zusatzknotens (6) dem der anderen Knoten (2) entspricht und dass als Gerät eine Schaltungsanordnung (7) angeschlossen ist, die ein nicht dem Protokoll entsprechendes Signal erzeugt.

4. Datenring nach einem der Ansprüche 1 bis 3,
**dadurch gekennzeichnet, dass**
es sich um einen Fibre-Channel-Datenring handelt.

5. Datenring nach Anspruch 3,
**dadurch gekennzeichnet, dass**
durch den Zusatzknoten (6) die Übertragung der Synchronisationssignale gestört wird und **dadurch** bei den anderen Knoten (2) ein Synchronisationsfehler ausgelöst wird.

6. Datenring nach Anspruch 5,
**dadurch gekennzeichnet, dass**
bei den Knoten (2) bei Auftreten eines Synchronisations- oder eines anderen Datenringfehlers die Durchführung einer Neuinitialisierung vorgesehen ist.

7. Verfahren zum Betrieb eines Datenrings mit
- mehreren abschaltbaren Knoten (2) zum Anschluss von Geräten (4), die zur Kommunikation miteinander vorgesehen sind, wobei die Knoten (2) nach Erkennung eines Fehlerzustandes eine Neuinitialisierung oder Fehlerbehandlungsroutine auslösen, und
- einer Kontrollvorrichtung (5) zur Überwachung und Ansteuerung der Knoten (2)
**gekennzeichnet durch**
- einen zuschaltbaren Zusatzknoten (6), der ebenfalls **durch** die Kontrollvorrichtung (5) angesteuert wird und Mittel aufweist zur gezielten Herstellung eines Fehlerzustandes bei anderen Knoten (2),
wobei
- in einem ersten Verfahrensschritt nach einem Abschalten eines Knotens (2) aus dem Datenring **durch** Schliessen eines Bypass oder Zuschalten eines Knotens (2) an den Datenring **durch** Öffnen eines Bypass der Zusatzknoten (6) **durch** die Kontrollvorrichtung (5) zugeschaltet wird,
- in einem zweiten Verfahrensschritt ein Fehlerzustand **durch** die Mittel des Zusatzknotens (6) bei anderen Knoten hergestellt wird und gleichzeitig die anderen Knoten in den Datenring (3) gehalten werden und
- bei Zuschaltung eines Knotens (2) in einem dritten Verfahrensschritt der zuzuschaltende Knoten (2) dem Datenring (3) hinzugefügt wird.

## Claims

1. Data ring (3) having
- two or more nodes (2), which can be disconnected, for connection of appliances (4) which are intended for communication with one another, with means for fault handling being provided in the nodes (2), and a reinitialization or a fault handling routine being initiated after identification of a fault state, and
- a monitoring apparatus (5) for monitoring and driving the nodes (2),
**characterized in that**
- an additional node (6) which can be connected by means of the monitoring device (5) is provided in the data ring (1), and has means for deliberately producing a fault state in the other nodes (2), and
- during the production of the fault state in the other nodes (2) by means of the additional node (6), the other nodes (2) are held in the data ring (3) by the monitoring device (5).

2. Data ring according to Claim 1,
**characterized in that**
serial data traffic takes place via the data ring (3), using a protocol in accordance with which synchronization signals are provided.

3. Data ring according to Claim 2,
**characterized in that**
the configuration of the additional node (6) corresponds to that of the other nodes (2), and **in that** a circuit arrangement (7) which produces a signal which does not comply with the protocol is connected as the appliance.

4. Data ring according to one of Claims 1 to 3,
**characterized in that**
the data ring is a fibre channel data ring.

5. Data ring according to Claim 3,
**characterized in that**
the additional node (6) interferes with the transmission of the synchronization signals and thus initiates a synchronization fault in the other nodes (2).

6. Data ring according to Claim 5,
**characterized in that**,
when a synchronization fault or any other data ring fault occurs, a reinitialization process is carried out in the nodes (2).

7. Method for operation of a data ring, having
- two or more nodes (2) which can be disconnected for connection of appliances (4) which are intended for communication with one another, with the nodes (2) initiating a reinitialization or a fault handling routine after identification of a fault state, and
- a monitoring apparatus (5) for monitoring and driving the nodes (2),
**characterized by**
- an additional node (6) which can be connected, is likewise driven by the monitoring apparatus (5) and has means for deliberately producing a fault state in other nodes (2),
with
- the additional node (6) being connected to the data ring by the monitoring apparatus (5), by opening a bypass, in a first method step after disconnection of a node (2) from the data ring by closing a bypass or connection of a node (2) to the data ring,
- a fault state being produced in other nodes by the means of the additional node (6), and the other nodes at the same time being held in the data ring (3), in a second method step, and
- the node (2) to be connected being added to the data ring (3) on connection of a node (2) in a third method step.

## Revendications

1. Anneau (3) de données comprenant
- plusieurs noeuds (2) déconnectables de raccordement d'appareils (4) qui sont prévus pour une communication entre eux, des moyens de traitement d'erreur étant prévus pour les noeuds (2) et, après détection d'un état d'erreur, une réinitialisation ou un sous-programme de traitement d'erreur étant déclenché(e) ; et
- un dispositif (5) de contrôle, de surveillance et de commande des noeuds (2),
**caractérisé en ce que**
- il est prévu dans l'anneau (1) de données un noeud (6) supplémentaire pouvant être connecté par le dispositif (5) de contrôle et ayant des moyens de ménager à dessein un état d'erreur dans d'autres noeuds (2) ; et
- pendant que l'état d'erreur est ménagé par le moyen du noeud supplémentaire dans les autres noeuds (2), les autres noeuds (2) sont maintenus par le dispositif (5) de contrôle dans l'anneau (3) de données.

2. Anneau de données suivant la revendication 1,
**caractérisé en ce qu'**il s'effectue par l'anneau (3) de données une circulation de données sérielle avec un protocole suivant lequel des signaux de synchronisation sont prévus.

3. Anneau de données suivant la revendication 2,
**caractérisé en ce que** la structure du noeud (6) supplémentaire correspond à celle des autres noeud (2) et **en ce qu'**il est raccordé en tant qu'appareil un montage (7) qui produit un signal ne correspondant pas au protocole.

4. Anneau de données suivant l'une des revendications 1 à 3,
**caractérisé en ce que** c'est un anneau de données Fibre-Channel.

5. Anneau de données suivant la revendication 3,
**caractérisé en ce que**, par le noeud (6) supplémentaire, la transmission des signaux de synchronisation est perturbée et il est ainsi déclenché dans les autres noeuds (2) une erreur de synchronisation.

6. Anneau de données suivant la revendication 5,
**caractérisé en ce qu'**il est prévu dans les autres noeuds, lorsque survient une erreur de synchronisation ou une erreur d'un autre anneau de données, d'effectuer une réinitialisation.

7. Procédé pour faire fonctionner un anneau de données comprenant
- plusieurs noeuds (2) déconnectables de raccordement d'appareils (4) qui sont prévus pour communiquer entre eux, les noeuds déclenchant après détection d'un état d'erreur une réinitialisation ou un sous-programme de traitement d'erreur ; et
- un dispositif (5) de contrôle pour surveiller et commander les noeuds (2),
**caractérisé par**
- un noeud (6) supplémentaire qui peut être connecté, qui est commandé également par le dispositif (5) de contrôle et qui a un moyen pour ménager à dessein un état d'erreur dans les autres noeuds (2),
dans lequel
- dans un premier stade du procédé, après une déconnexion d'un noeud (2) de l'anneau de données par fermeture d'un court-circuit ou après la connexion d'un noeud (2) sur l'anneau de données par ouverture d'un court-circuit, le noeud (6) supplémentaire est connecté par le dispositif (5) de contrôle ;
- dans un deuxième stade de procédé, un état d'erreur est ménagé par le moyen du noeud (6) supplémentaire dans les autres noeuds et, en même temps, les autres noeuds (2) sont maintenus dans l'anneau (3) de données ; et
- lors de la connexion d'un noeud (2) dans un troisième stade de procédé, le noeud (2) à connecter est ajouté à l'anneau (3) de données.
